# EUROPEAN PATENT APPLICATION

(11) **EP 4 822 650 A1**
(43) Date of publication of application: **14.10.2026**
(21) Application number: 24899852.8
(22) Date of filing: 04.12.2024
(51) Int. Cl.: G06T 19/00

(54) **METHOD FOR RUNNING INTERACTABLE VIRTUAL OBJECT IN VIRTUAL (3D) SPACE IN ISOLATED MANNER, AND DEVICE AND COMPUTER PROGRAM PRODUCT**

(30) Priority: 04.12.2023 CN 202311651289
(71) Applicant: Hangzhou Lingban Technology Co., Ltd., Hangzhou, Zhejiang 310000 (CN)
(72) Inventor: LIU, Yazhong, Hangzhou, Zhejiang 310000 (CN); ZHU, Mingming, Hangzhou, Zhejiang 310000 (CN); ZENG, Tao, Hangzhou, Zhejiang 310000 (CN)
(74) Representative: Huang, Liwei
(86) International application number: PCT/CN2024/136730
(87) International publication number: WO 2025/119214

(57) **Abstract**

This application relates to a method for running an interactive virtual object in isolation in a virtual (3D) space, including: loading, in response to a start instruction of a user in a parent space, a program package corresponding to an interactive virtual object into the parent space, where the parent space includes one or more subspaces; parsing the program package to obtain attribute information, spatial information, and script information in the program package; and rendering the interactive virtual object in one of the subspaces according to the spatial information and/or the script information, where the interactive virtual object may receive one or more interactive operations from the user and provide feedback, where the virtual (3D) space is constructed by using an augmented reality device and may be browsed by the user in the parent space by using a display module of the augmented reality device. In this application, a spatial application applicable to the augmented reality device can be developed and deployed rapidly, simply, and efficiently by using a lightweight Web development technology.

## Description

### CROSS-REFERENCE TO RELATED APPLICATIONS

This application is based upon and claims priority to Chinese Patent Application No. 202311651289.9, filed on December 4, 2023, which is incorporated herein by reference in its entirety.

### TECHNICAL FIELD

This application relates to the field of software system technology, and in particular, to a method for running an interactive virtual object in isolation in a virtual (3D) space, a device, and a computer program product.

### BACKGROUND

In an augmented reality (AR) or virtual reality (VR) scenario, the display is not limited by a screen size, but spatial display is enabled. A space refers to an area in a real world. The area may be a plane, or may be a three-dimensional object. A user may obtain spatial information, such as spatial dimensions, a spatial position, and a spatial rotation angle, by using a program running in space. In general AR application development, a space scenario is used to host an AR application, that is, the AR application runs in the space, or an application program that occupies a specific space may be referred to as a space APP.

A key technical point of space APP development lies in how to run an independent application in a subspace of a parent space (main application) without affecting the running of the main application.

### SUMMARY

Objectives of this application are to provide a novel method for running an interactive virtual object in isolation in a virtual (3D) space based on a Web technology, and an apparatus.

According to a first aspect of this application, a method for running an interactive virtual object in isolation in a virtual (3D) space is provided, including: loading, in response to a start instruction of a user in a parent space, a program package corresponding to an interactive virtual object into the parent space, where the parent space includes one or more subspaces; parsing the program package to obtain attribute information, spatial information, and script information in the program package; and rendering the interactive virtual object in one of the subspaces according to the spatial information and/or the script information, where the interactive virtual object may receive one or more interactive operations from the user and provide feedback, where the virtual (3D) space is constructed by using an augmented reality device and may be browsed by the user in the parent space by using a display module of the augmented reality device.

According to a second aspect of this application, an augmented reality device is provided, including: a display module, where the display module is configured to form a visual 3D space in front of a user; a memory, where the memory is configured to store computer instructions; and a processor, where the memory is configured to execute the computer instructions, where the computer instructions, when executed by the processor, cause an interactive virtual object to be displayed in the 3D space presented by the display module, including: loading an XML program package containing spatial information and corresponding to interactive virtual object into a parent space, where the parent space includes one or more subspaces; parsing the program package to obtain attribute information, spatial information, and script information in the XML program package containing the spatial information; and rendering the interactive virtual object in one of the subspaces according to the spatial information and/or the script information, where the interactive virtual object may receive one or more interactive operations from the user and provide feedback.

According to a third aspect of this application, a computer program product is provided, is configured to run an interactive virtual object in an augmented reality device, and includes: an XML document and optional file content, where the XML document includes attribute information, spatial information, and script information; and when the XML document is executed by the augmented reality device in a parent space, the interactive virtual object may be rendered in a subspace of the parent space by using the spatial information and/or the script information, where the interactive virtual object may receive one or more interactive operations from the user and provide feedback.

One or more implementations of this application implement a method for running an interactive virtual object in isolation in a virtual (3D) space, a device, and a computer program product. By using a lightweight Web development technology, a spatial application applicable to the augmented reality device can be developed and deployed rapidly, simply, and efficiently, and a lightweight spatial application with interactive virtual object presentation and interaction functions, such as an alarm clock or a virtual pet, can be developed and deployed easily.

### BRIEF DESCRIPTION OF DRAWINGS

FIG. 1 is a schematic diagram of an augmented reality device according to one or more embodiments of this application;
FIG. 2 is a schematic diagram of a spatial structure in an augmented reality device according to one or more embodiments of this application;
FIG. 3 is a flowchart of a method for running an interactive virtual object in isolation in a virtual (3D) space according to one or more embodiments of this application;
FIG. 4 is a schematic diagram of an interactive virtual object running interface according to one or more embodiments of this application;
FIG. 5 is a schematic diagram of a computer program product framework according to one or more embodiments of this application; and
FIG. 6 is a framework diagram of an augmented reality device according to one or more embodiments of this application.

### DETAILED DESCRIPTION OF THE EMBODIMENTS

To further elaborate the technical means adopted by this application to achieve the intended objectives as well as effects, detailed implementations, structures, features, and effects of a method for running an interactive virtual object in isolation in a virtual (3D) space, a device, and a computer product according to this application are described in detail below with reference to the accompanying drawings and preferred embodiments.

In an augmented reality (AR) scenario, a space refers to an area in a real world. The area may be a plane, or may be a three-dimensional object. A user obtains spatial information, such as spatial dimensions, a spatial position, and a spatial rotation angle, by using a virtual object running in space. In general AR spatial application development, a scenario is used to host the space. An embeddable space, also referred to as a subspace, refers to a complete space that contains some objects, and may be embedded into a parent space as a component of the parent space. In this way, first, the subspace may be randomly moved, rotated, or scaled in the parent space; second, an interaction with an object in the subspace may be directly performed in the parent space; and third, a plurality of subspaces may be combined together in the parent space to form a more complex space.

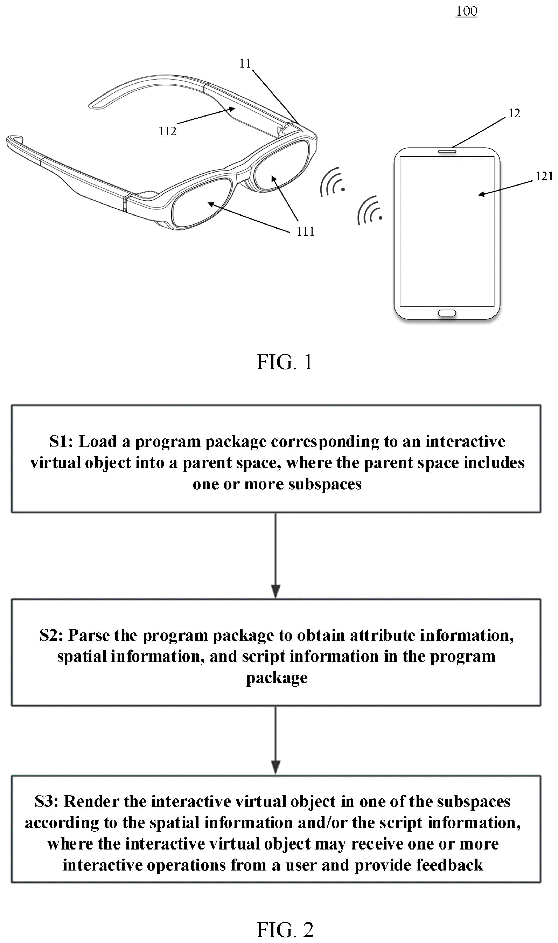

An augmented reality scenario may be generally implemented by using an augmented reality device (for example, augmented reality glasses, namely AR glasses). As shown in FIG. 1, an exemplary system architecture 100 may include a pair of augmented reality glasses 11 and an optional computing terminal 12.

The augmented reality glasses 11 may include one or two display screens 111. The display screen is configured to display a virtual interface. In addition, the augmented reality glasses 11 further include a glasses frame 112. In some embodiments, a sensor, a processing unit, a memory, and a battery of the augmented reality glasses 11 may be placed inside the glasses frame 112. In some embodiments, one or more selected from the sensor, the processing unit, the memory, and the battery may alternatively be integrated into another independent accessory (not shown in FIG. 1), and connected to the glasses frame 112 by using a data cable. In some embodiments, the augmented reality glasses 11 may have only a display function and some sensors, and provide capabilities such as data processing, data storage, and power supply by using the computing terminal 12.

The computing terminal 12 may include a touch-sensitive display screen 121. In some embodiments, the augmented reality glasses 11 and the computing terminal 12 may communicate in a wireless connection manner. In some embodiments, the augmented reality glasses 11 and the computing terminal 12 may alternatively be connected by using a data cable (not shown in FIG. 1). It should be understood that the number of augmented reality glasses 11 and the number of computing terminals 12 shown in FIG. 1 are merely illustrative. Any suitable number of augmented reality glasses 11 and any suitable number of computing terminals 12 may be provided according to implementation requirements.

A virtual (3D) space may be presented in front of the user by using the two display screens 111 of the augmented reality glasses 11. A reason for achieving a 3D spatial effect is that a distance between human eyes leads to different viewing angles when the two eyes observe the same object. This difference is called binocular disparity, which serves as the basis for depth perception. The AR glasses present a three-dimensional effect by simulating this difference. The augmented reality glasses 11 are usually equipped with binocular cameras to simulate human eyes. The two cameras are mounted on the glasses, and are usually distributed at positions with a spacing therebetween close to a spacing between human eyes. The binocular cameras capture images of a surrounding environment in real time, and the images correspond to viewing angles of the left eye and the right eye, respectively. The captured images provide depth information of a scenario, which helps render a 3D effect more accurately. The captured images for the left eye and the right eye are sent to the built-in processing unit of the augmented reality glasses 11. The processing unit is responsible for image processing and calculation to generate images suitable for each eye. The processing unit adjusts the images according to the binocular disparity, so as to ensure that there are some differences in vision between the images viewed by the left eye and the right eye, thereby generating a sense of depth. This usually involves adjusting displacement, angles, or perspective effects of the images. The adjusted image are projected to the left eye and the right eye respectively by using the display screens or a projection technology. In this way, each eye can see a slightly different image, thereby creating a sense of depth. After the user wears the augmented reality glasses 11, each eye sees a unique image. Through processing by the brain, these images are combined into a perceptually stereoscopic scenario. The 3D effect perceived by the user is simulated by the difference between the images seen by the two eyes, enabling both a virtual object and a real object to present depth and a sense of realism in the 3D space. In this manner, the augmented reality glasses 11 can provide a realistic and stereoscopic 3D augmented reality experience for the user.

Similar to a planar (2D) display, an application may be run or an object may be displayed in a virtual (3D) space. The difference lies in that the application or object running in the virtual (3D) space may be in a three-dimensional shape and have three-dimensional spatial coordinates. When a three-dimensional object is displayed in a virtual (3D) space, the three-dimensional object occupies a specific spatial position and spatial dimensions of the virtual (3D) space. According to one or more embodiments of this application, the three-dimensional object may include a basic shape such as a sphere or a cube, or may include a complex object including basic shapes, for example, having an alarm clock shape, a galaxy shape, or an animal shape. An object that can interact with a user is referred to as an interactive virtual object. According to one or more embodiments of this application, the interactive virtual object may receive an interactive instruction from the user, including but not limited to clicking, rotation, and scaling. For example, for a virtual pet dog, the user may perform, by using an interactive capability provided by an augmented reality device, an interactive action such as patting the virtual pet dog, and the virtual pet dog may respond to the patting action of the user and make corresponding feedback (for example, nodding action). The interactive virtual object may be considered as a simple spatial application. To ensure that the interactive virtual object can be compatible between different platforms, a set of standards is required to standardize the running and interaction of the interactive virtual object.

In the augmented reality field, degrees of freedom (DoF) are generally used to describe a real degree of a space. Higher degrees of freedom indicate a more real space. Generally, a pose of an object in space may be quantitatively described by using position and orientation. Therefore, when the motion of an object in space is described, the motion of the object may be decomposed into displacement and orientation. In an XYZ coordinate system, the displacement may be denoted as an X-axis offset, a Y-axis offset, and a Z-axis offset, and the orientation may be denoted as an X-axis rotation angle (pitch angle), a Y-axis rotation angle (yaw angle), and a Z-axis rotation angle (roll angle). Therefore, for an object in space, if the object moves freely in space, the object generates three axial variations along the X, Y and Z axes caused by motion, as well as angular variations caused by orientation changes. The degrees of freedom used to describe the pose variation of an object in space are expressed as DoF.

Zero degrees of freedom (0DoF) refer to viewing a virtual space at a fixed angle of view by an observer in a current space. Three degrees of freedom (3DoF) refer to three degrees of freedom that can be used by an observer in a current space. Generally, the three degrees of freedom refer to a space orientation. In the virtual space, if a camera changes only in orientation, it may indicate that the current space has three degrees of freedom, namely 3DoF. This means that an object in the virtual space controls, according to a program, the implementation of a change in its own position in the space, a position of an observer is always at a spatial origin, and the virtual space is observed by using different orientations (rotation). Six degrees of freedom (6DoF) refers to six degrees of freedom that can be used by an observer in a current space, that is, there are a total of six positions and orientations (rotation). When a camera in a virtual space may generate changes in position and orientation (rotation), it may indicate that the current space has six degrees of freedom, namely 6DoF. The observer (camera) may view the virtual space in any pose in space.

The interactive virtual object may have one of 0DOF, 3DOF, and 6DOF. The degrees of freedom of the interactive virtual object are generally determined according to degrees of freedom of the parent space in which the interactive virtual object is located, and may be kept consistent with the degrees of freedom of the parent space, or an appropriate degrees of freedom may be allocated to the interactive virtual object by the parent space. Therefore, the most appropriate interaction manner may be configured according to characteristics of different interactive virtual objects. In an embodiment, a virtual object of an alarm clock type may be configured to have zero degrees of freedom (0DoF), and thus the alarm clock is always displayed in a camera field of view (FOV) of a user to remind the user in real time. In an embodiment, a virtual object of a virtual human assistant type may be configured to have three degrees of freedom (3DOF), so that when a user focuses on another interface operation, a virtual human may not need to be in the user's field of view, and the user can view and interact with the virtual human merely by adjusting different orientations. In an embodiment, an interactive virtual object of a pet type may be configured to have six degrees of freedom (6DOF), so that changes in the position and orientation of the user enable more realistic interactions with a virtual pet, thereby improving user experience.

As an interactive virtual object is a lightweight spatial application, there may be a plurality of interactive virtual objects in a running parent space. Therefore, one of the key technical problems of the present disclosure is how to ensure that the interactive virtual objects run without affecting each other, and how to ensure that stability of the parent space is not affect after the plurality of interactive virtual objects appear.

As shown in FIG. 2, a method for running an interactive virtual object in isolation in a virtual (3D) space according to one or more embodiments of this application is illustrated. The method includes the following steps.

S1: Load a program package corresponding to an interactive virtual object into a parent space, where the parent space includes one or more subspaces.

S2: Parse the program package to obtain attribute information, spatial information, and script information in the program package.

S3: Render the interactive virtual object in one of the subspaces according to the spatial information and/or the script information, where the interactive virtual object may receive one or more interactive operations from a user and provide feedback.

The virtual (3D) space is constructed by using an augmented reality device and may be browsed by the user in the parent space by using a display module of the augmented reality device.

In step S1, the program package corresponding to the interactive virtual object is loaded into the parent space, where the parent space includes one or more subspaces. In an embodiment, the program package may be described by an extensible markup language (XML) containing spatial information, where XML is a markup language that provides rules to define any data. Unlike other programming languages, XML cannot directly perform a calculation operation. On the contrary, any programming language or software may be used for structured data management. An XML containing spatial information is an XML that contains spatial information based on a general-purpose XML, which may be referred to as an eXtended Spatial Markup Language (XSML). In one or more embodiments of this application, the XSML is a markup language that is very similar to HTML. The XSML uses some label definitions of the HTML, such as head, title, script, style, and div, and adds some labels to represent space. For example, body is replaced with space, and cube is used to denote a cube. It may be understood that, in another implementation, another marker language including spatial information is alternatively used to describe an interactive virtual object.

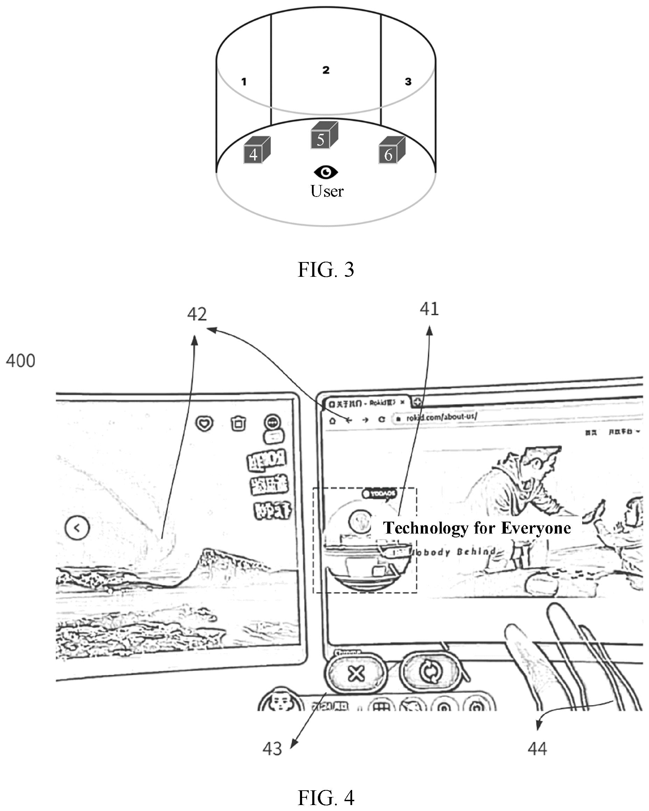

In one or more embodiments, the parent space may be a system desktop of an operating system allowed by an augmented reality device, and the system desktop may be understood as a spatial application. Content such as a status bar, an application list, and a running application page may be displayed on the system desktop. As shown in FIG. 3, a system desktop in an augmented reality device is set as a space of a cylinder. In this space, a user may view a series of virtual screens (1, 2, and 3) in the space. These virtual screens may display an application list and opened application content. In addition, the user may also view some corresponding independent interactive virtual objects (4, 5, and 6). These virtual objects correspond to independent subspaces in the desktop space, and run without affecting each other. In this application, the interactive virtual object is also referred to as a spatial mini program.

To enable an interactive virtual object to run in the system desktop, the user may click on an icon or the like to start an XML program package corresponding to the interactive virtual object, and the system starts loading the XML program package of the interactive virtual object. The XML program package corresponding to the interactive virtual object includes: an XML document containing spatial information, and optional file content, where the file content includes one or more selected from a script file, a model file, and an audio file. These files may all be loaded over a network or locally. To increase a loading speed, during the running of the program package files, used resources may be cached locally, so that the resources can be read directly locally during next loading. During resource loading, MD5 values may be utilized to determine whether the program package content is changed and determine whether the cache needs to be updated. If no cache solution is used (that is, no .md5 file is generated), each time resources are loaded, resources are loaded from a network, and a local cache is not used. In this way, this can maintain a loading logic consistent with that of a web page.

In step S2, the program package is parsed to obtain the attribute information, the spatial information, and the script information in the program package. The XML package includes an XML document and optional file content. The XML document may include attribute information, spatial information, and script information, and the optional file content includes one or more selected from a script file, a model file, and a sound effect file. The script file is linked to the script information. Correspondingly, the script file is executed on the augmented reality device in response to the script information being parsed.

The script information in the XML document is constructed in a language such as TypeScript and JavaScript. Preferably, the script information in the XML document is constructed by using TypeScript because in the field of 3D space development, object relationships are more complex. Therefore, type checking is essential for JavaScript. As a superset of JavaScript, TypeScript provides type checking, which enables developers to discover errors earlier in the development process and improve development efficiency. In addition, because TypeScript is a superset of JavaScript, supporting TypeScript also means supporting JavaScript.

Two embodiments of the XML program package are shown as follows. The attribute information characterizes basic information of the XML program package, and may include a version number, a title, a link, a style, and other information. <version> may be used to denote the version number of the XML program package, such as 1.0 and 2.0, which is used to indicate the version number of the XML document used. The title may be defined by using <title>, which is used to define the title of the XML program package. The content of the title is a string. The link may define link information of an external resource by using a <link> tag. For example, a 3D model file such as a 3D model file in a glb format may be referenced by using a <link> tag; and spatial cascading style sheets (Spatial CSS (SCSS)) and grid model files in other formats may also be introduced by using a <link> tag, so as to present a richer display effect of interactive virtual objects.

| Embodiment | Example code | Description |
|---|---|---|
| 1 | <xsml version="1.0"> | A spatial mini program is titled Rokid Jungle, contains a welcome.glb model file in the space, and executes a main.ts script, with the space filled with the welcome.glb model. |
| | <head> | |
| | <title>Rokid Jungle</title> | |
| | <link id="model" rel="mesh" type="octstream/glb" | |
| | href="./model/welcome.glb" /> | |
| | <script src="./lib/main.ts"></script> | |
| | </head> | |
| | <space> | |
| | <mesh id="model" ref="model" selector="__root__" /> | |
| | </space> | |
| | </xsml> | |
| 2 | <xsml version="1.0"> | A spatial mini program is titled Animation Easing and contains a main.ts script, with a default space. |
| | <head> | |
| | <title>Animation Easing</title> | |
| | <script src="./lib/main.ts"></script> | |
| | </head> | |
| | <space> | |
| | </space> | |
| | </xsml> | |

The spatial information includes style information described by an XML document, and the spatial information may be defined by using the <space> tag. The <space> tag is used to define a spatial structure. Subtags of the <space> tag may include a mesh, a cube, a sphere, a cylinder, a cone, a plane, text, an image, a video, audio, and the like. A rich interactive virtual object may be constructed by combining subtags in the <space> tag. For example, a cube with a side length of 10 may be defined in a space by using <space> 3 <cube width=" 10" height="10" depth=" 10" /> 4 </space>. In some embodiments, the <space> tag may be in a default state, that is, the <space> tag does not include any code. This represents that the space is in a vacuum state, and does not include any space element defined by the XSML. However, this does not represent that no content exists in the space. In this case, one or more embodiments of this application also support rendering of a corresponding space by using style information described by script information in the <script> tag, where style information described by the script information may be based on a Babylon.js framework. In a specific embodiment, a complex interactive virtual object, such as an alarm clock or a lion, may be defined in a space by a combination of subtags.

In one or more embodiments, an interactive virtual object defined in the spatial information may be changed. An object ID of the interactive virtual object that needs to be adjusted may be first identified, and then an internal structure is accessed by using a path of the object ID. Finally, a child element inside the object may be selected by using a traversal method, and a style of the element is adjusted by using a style attribute. In an embodiment that supports a DOM API spatial mini program development framework, a spatialDocument object may be newly added based on a DOM API, and is expressed as a document object in a space, and a 3D object with an ID of foo is queried by using a getSpatialObjectByld('foo') of the spatialDocument object. shadowRoot of this 3D object is accessed to interact with an internal structure of the object. querySelectorAll() is used to select all child elements in the 3D object, and a style attribute is used to modify styles of the selected child elements. In addition, addEventListener() may also be used to listen for events on these child elements. According to one or more embodiments of this application, a function name may also be adjusted to another name, provided that a similar function is implemented.

In step S3, the interactive virtual object is rendered in one of the subspaces according to the spatial information and/or the script information, where the interactive virtual object may receive one or more interactive operations from a user and provide feedback. When the XML document is parsed by a processor, the processor renders the virtual object according to the spatial information and/or the script information, and presents the virtual object on an augmented reality device. That is, when the XML document is executed in the parent space, the interactive virtual object may be rendered in one of the subspaces of the parent space by using the spatial information and/or the script information, where the interactive virtual object may receive one or more interactive operations from the user and provide feedback. A final rendering result may be performed by using a 3D engine such as Unity, Unreal, and Apple Reality Kit. In a preferred embodiment, during rendering of interactive virtual objects, an independent data channel is created for each interactive virtual object, so as to ensure that rendering of each interactive object is independent. Data communication between the method and the Unity engine may be performed by using an interface provided by the Unity SDK.

FIG. 4 is a schematic diagram of an interactive virtual object running interface 400 according to one or more embodiments of this application. The interface 400 is a system desktop of an augmented reality device, and may be considered as a parent space. The parent space includes two browser interfaces 42, a system menu 43, and a schematic gesture diagram 44. The parent space further includes a spatial mini program 41 (in a dashed line frame range), which runs before the browser interfaces 42 and may perform an operation such as rotation, enlargement, or movement in response to a click operation from the user. The spatial mini program 41 is executed by using one or more embodiments of this application. The user may easily open the spatial mini program 41 in the parent space without affecting running of another program, and perform a function of the spatial mini program 41 without affecting running of another interface element.

According to one or more implementations of this application, each subspace has a spatial position and a volume that are set by the parent space, the parent space and the subspace have the same degrees of freedom, and the degrees of freedom are selected from one of 0DOF, 3DOF, and 6DOF; the interactive virtual object is rendered in the subspace according to the spatial position and the volume, and is browsed by the user according to degrees of freedom by using the display module of the augmented reality device . In the embodiment shown in FIG. 4, as the parent space in this embodiment is a 6DOF space, the spatial mini space 41 opened in the parent space also supports the 6DOF. In addition, an initial position and a size of the spatial mini space 41 are defined by the parent space, to prevent the spatial mini program 41 from appearing in a position at which it is difficult for the user to interact with the spatial mini program, or from having an excessively large or small size.

According to one or more implementations of this application, the number of subspaces is preset by the parent space, and may be preferably 1 to 5. An excessive number of subspaces may impose high requirements on processor resources and cause confusion to the user. If a spatial mini program has occupied all subspaces, the user cannot open more spatial mini programs unless the user closes the running spatial mini program to free up new subspaces.

According to one or more implementations of this application, the program package of the interactive virtual object supports third-party application programming interfaces (APIs), such as a Babylon.js API, a Web API, and a Node.js API. Through these third-party APIs, more a complex virtual object can be created and complex interaction logic can be supported. The third-party APIs are invoked in response to detecting an instruction for invoking the third-party APIs in the script information. For example, Babylon.js is a JavaScript framework that uses HTML5 and WebGL to construct a 3D game. In a program package of an interactive virtual object, a Babylon.js scenario is created by default, and may be obtained by using a global variable spaceDocument. Node.js is a JavaScript running environment based on a Chrome V8 engine.

According to one or more implementations of this application, a spatial mini program may support input events such as a mouse input event, a key input event, a hand joint input event, and a gesture input event, and by using the input events, some interactive effects, such as clicking, dragging, and rotation, may be implemented. Listening for an input event may be started in response to a listening event start instruction in the script information. One or more interactive effects among clicking, dragging, rotating, scaling, and moving the interactive virtual object are achieved by executing the input event. A response to an input event is also a key feature of an interactive virtual object. Compared with a conventional planar application, the interactive virtual object may interact with a user in a higher dimension by occupying a 3D space, thereby improving interestingness and interactivity of a spatial mini program.

According to one or more implementations of this application, concepts of the parent space and the subspace are set to ensure safe running between applications. The parent space may be a space occupied by a desktop layer of an operating system. The subspace refers to a complete space that contains some objects, and may be embedded into a parent space as a component of the parent space. A core technical point of a spatial mini program is how to embed one space (a spatial mini program) into another space (a main application) without affecting running of the main application. This is referred to as space security. A more vivid analogy is as follows: In a browser, different web pages run in a same web browser without mutual interference, and this is security of the browser; and in a window operation program, different windows run on the same screen, the windows do not interfere with each other, and this is the security of the window operation program.

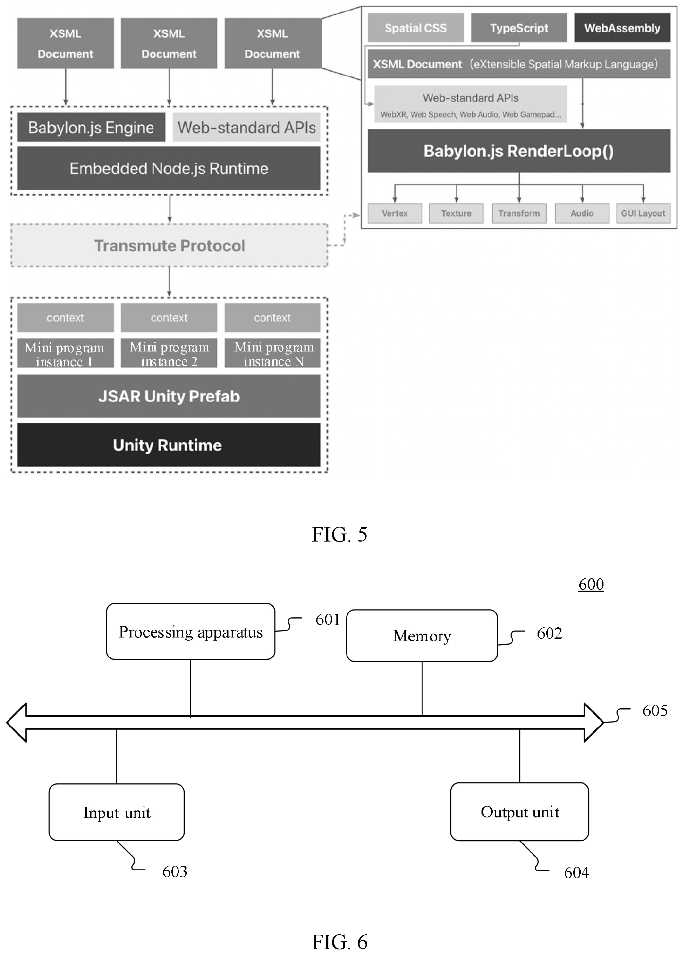

FIG. 5 is a schematic diagram of a computer program product framework according to one or more embodiments of this application. The framework diagram shows three XML program packages (XSML documents) containing spatial information. The XML program packages containing spatial information each include an XML document, Spatial CSS, and a Type Script. An embedded Node.js runtime supports Babylon.js Engine and a Web-standard API, and then generates a transmute protocol by using the RenderLoop method of Babylon.js. The transmute is a JavaScript library that is configured to convert structured data into renderable content. The RenderLoop is a continuous process, which is a process in which an event is transmitted to an App by using a user gesture or the like, then the App transmits the event to the operating system and finally responds to the event, the response updates information such as a geometric vertex, material texture, an object transformation matrix, audio, and a graphical user interface (GUI) layout, and then multi-dimensional results of the response are delivered to the user. In the Unity runtime, an instance of each spatial mini program in the Unity (e.g., the mini program instance 1/2/N in FIG. 5) is obtained by initializing a Unity prefab provided by the JSAR (supporting developers in developing a mini program with an embeddable space by using a web-like technology), and the instance generates a rendering result by using the transmute protocol context. During rendering, an independent data channel is allocated to each spatial mini program to ensure that rendering of each spatial mini program is independent, and each spatial mini program runs in isolation.

As shown in FIG. 6, the augmented reality device 600 may include a processing apparatus (such as a central processing unit or a graphics processing unit) 601, a memory 602, an input unit 603, and an output unit 604. The processing device 601, the memory 602, the input unit 603, and the output unit 604 are connected to each other by a bus 605. Herein, the method according to the embodiment of this application may be implemented as a computer program, which is stored in the memory 602. For example, some embodiments of this application include a computer program product, including a computer program carried on a computer-readable medium, where the computer program includes program code for performing the method shown in the flowchart. The processing apparatus 601 in the augmented reality device specifically implements a virtual interface display function defined in the method in this application by invoking the computer program stored in the memory 602. In some implementations, the input unit 603 may include a touch device (for example, a touch-sensitive display screen of a target device) and a camera that performs gesture recognition. In this way, whether the user performs an operation on the virtual interface may be detected by the touch device or the camera of the input unit 603, and then, in response to determining that the result is yes, the processing apparatus 601 may invoke the computer program to execute the application page display function. The output unit 604 may include a display screen, which is configured to display a virtual interface.

An embodiment of this application further provides a computer program product, configured to run an interactive virtual object in an augmented reality device. The interactive virtual object may be included in the augmented reality device, or may exist independently, but is not assembled into the augmented reality device. The computer program product includes: an XML document and optional file content, where the XML document includes attribute information, spatial information, and script information; and when the XML document is executed by the augmented reality device in a parent space, the interactive virtual object may be rendered in a subspace of the parent space by using the spatial information and/or the script information, where the interactive virtual object may receive one or more interactive operations from the user and provide feedback.

Computer program code for performing operations in some embodiments of this application may be written in one or more programming languages or a combination thereof, such as Java, Smalltalk, and C++, which further include conventional procedural programming languages such as the C language or similar programming languages. The program code may be completely executed on a user computer, partially executed on a user computer, executed as an independent software package, partially executed on a user computer and partially executed on a remote computer, or completely executed on a remote computer or a server. In a case of the remote computer, the remote computer may be connected to the computer of the user through any type of network, including a local area network (LAN) or a wide area network (WAN), or may be connected to an external computer (for example, connected through the Internet with the aid of an Internet service provider).

The flowcharts and the block diagrams in the accompanying drawings illustrate possible system architectures, functions, and operations of the system, the method, and the computer program product according to various embodiments of this application. In this regard, each block in the flowcharts or the block diagrams may represent a module, a program segment, or a part of code. The module, the program segment, or the part of the code includes one or more executable instructions used for implementing designated logic functions. It should also be noted that, in some implementations used as substitutes, functions annotated in blocks may alternatively occur in a sequence different from that annotated in the accompanying drawings. For example, two successively represented blocks may actually be performed basically in parallel, and sometimes the two blocks may be performed in a reverse sequence. This is determined by a related function. It should also be noted that each block in the block diagrams and/or the flowcharts, and a combination of the blocks in the block diagrams and/or the flowcharts may be implemented by a dedicated hardware-based system that executes specified functions or operations, or may be implemented by a combination of dedicated hardware and computer instructions.

The above-mentioned functions herein may be performed at least in part by one or more hardware logic components. For example, without limitation, exemplary types of hardware logic components that may be used include a field-programmable gate array (FPGA), an application-specific integrated circuit (ASIC), an application-specific standard product (ASSP), a system on chip (SOC), a complex programmable logic device (CPLD), and the like.

The foregoing descriptions are merely some preferred embodiments of this application and descriptions of applied technical principles. A person skilled in the art should understand that the invention scope involved in the embodiments of this application is not limited to a technical solution formed by a specific combination of the foregoing technical features, but also covers another technical solution formed by any combination of the foregoing technical features or equivalent features without departing from the foregoing inventive concept, for example, a technical solution formed by mutual replacement of the foregoing features and technical features (but not limited thereto) having similar functions that disclosed in the embodiments of this application.

## Claims

1. A method for running an interactive virtual object in isolation in a virtual 3D space, comprising:
loading, in response to a user's start instruction in a parent space, a program package corresponding to an interactive virtual object in the parent space, wherein the parent space comprises one or more subspaces;
parsing the program package to obtain attribute information, spatial information, and script information in the program package; and
rendering the interactive virtual object in one of the subspaces according to the spatial information and/or the script information, wherein the interactive virtual object is capable of receiving one or more interactive operations from the user and providing feedback, wherein
the virtual 3D space is constructed via an augmented reality device and is browsable by the user in the parent space via a display module of the augmented reality device.

2. The method according to claim 1, wherein the program package is an XML program package comprising spatial information, and comprises an XML document and optional file content; and
the XML document comprises attribute information, spatial information, and script information, and the optional file content comprises one or more selected from a script file, a model file, and a sound effect file, wherein
the script file is linked to the script information, and the script information is written in a TypeScript language; and the method further comprises:
executing the script file on the augmented reality device in response to that the script information has been parsed.

3. The method according to claim 1, wherein the step of rendering the interactive virtual object in one of the subspaces according to the spatial information and/or the script information comprises:
the spatial information comprises style information described by an XML document, and the script information comprises style information described by a Babylon.js framework; and
rendering in the subspace only according to the style information described in the script information, when the spatial information in a default state.

4. The method according to claim 1, wherein each subspace has corresponding spatial position and volume dimension to be set by the parent space, and the parent space and the subspace have same degrees of freedom; and
the interactive virtual object is rendered in the subspace according to the spatial position and the volume dimension, and the interactive virtual object is browsed by the user according to the degrees of freedom via the display module of the augmented reality device.

5. The method according to claim 1, comprising
in response to a listening event start instruction in the script information, starting listening for an input event, wherein the input event comprises one or more selected from a mouse input event, a key input event, a hand joint input event, and a gesture input event; and
executing the input event, so as to achieve one or more interactive effects selected from clicking, dragging, rotating, scaling, and moving of the interactive virtual object.

6. The method according to claim 2, wherein all file content of the program package is loadable at runtime over a network or locally, and
if the file content is loaded over a network, the augmented reality device caches corresponding resource locally, so that the resource is directly read locally during next loading.

7. The method according to claim 1, comprising invoking a third-party application programming interface, API, in response to detecting an instruction for invoking the third-party API in the script information, and the third-party API comprises a Babylon.js API Web API and a Node.js API.

8. The method according to claim 1, during rendering of interactive virtual objects, an independent data channel is created for each interactive virtual object, so as to ensure that rendering of each interactive object is independent.

9. An augmented reality device, comprising:
a display module, wherein the display module is configured to form a visual 3D space in front of a user;
a memory, wherein the memory is configured to store computer instructions; and
a processor, wherein the memory is configured to execute the computer instructions, wherein
the computer instructions, when executed by the processor, cause an interactive virtual object to be displayed in the 3D space presented by the display module, comprising:
loading an XML program package containing spatial information and corresponding to interactive virtual object in a parent space, wherein the parent space comprises one or more subspaces;
parsing the program package to obtain attribute information, spatial information, and script information in the XML program package containing the spatial information; and
rendering the interactive virtual object in one of the subspaces according to the spatial information and/or the script information, wherein the interactive virtual object is capable of receiving one or more interactive operations from the user and providing feedback.

10. A computer program product, used for running an interactive virtual object in an augmented reality device, the computer program product comprising:
an XML document and optional file content, wherein the XML document comprises attribute information, spatial information, and script information; and
when the XML document is executed by the augmented reality device in a parent space, the interactive virtual object is renderable in a subspace of the parent space by using the spatial information and/or the script information, wherein the interactive virtual object is capable of receiving one or more interactive operations from the user and providing feedback.
